# EUROPEAN PATENT SPECIFICATION

(11) **EP 4 690 169 B1**
(45) Date of publication and mention of the grant of the patent: **11.11.2026**
(21) Application number: 24719629.8
(22) Date of filing: 25.03.2024
(51) Int. Cl.: G09B 9/04, B60T 8/00, B60T 10/00, A63F 13/803, A63F 13/218, A63F 13/245, A63F 13/285, B60T 7/06, B60T 8/40, B60T 11/16, B60T 7/04

(54) **SIMULATION SYSTEM FOR SIMULATING A BRAKING SYSTEM, IN PARTICULAR FOR GAMING APPLICATIONS, AND RELATED GAMING SYSTEM**
SIMULATIONSSYSTEM ZUR SIMULATION EINES BREMSSYSTEMS, INSBESONDERE FÜR SPIELANWENDUNGEN, UND ENTSPRECHENDES SPIELSYSTEM
SYSTÈME DE SIMULATION POUR SIMULER UN SYSTÈME DE FREINAGE, EN PARTICULIER POUR DES APPLICATIONS DANS LE DOMAINE DU JEU, ET SYSTÈME DE JEU ASSOCIÉ

(30) Priority: 31.03.2023 IT 202300006318
(43) Date of publication of application: 11.02.2026
(73) Proprietor: Brembo S.p.A., 24035 Curno (BG) (IT)
(72) Inventor: FUSARO, Andrea, 24035 Curno (BG) (IT); MAGGIONI, Beatrice, 24035 Curno (BG) (IT); BERGAMI, Andrea, 24035 Curno (BG) (IT); VEDOVELLO, Rafael, 24035 Curno (BG) (IT); LORENZETTI, Mattia, 24035 Curno (BG) (IT)
(74) Representative: Perronace, Andrea
(86) International application number: PCT/IB2024/052845
(87) International publication number: WO 2024/201273

(56) References cited:
- CN-U- 214 475 715
- US-A1- 2022 333 618

## Description

The present invention relates to a simulation system for simulating a braking system, in particular for gaming applications, and a related gaming system.

### Background art

There are several patent documents describing braking simulation systems for gaming.

Patent document US2022333618 (Asetek Danmark) describes a hydraulic-type pedal simulator capable of providing a feedback to the user exactly when it is operated. More specifically, such a pedal simulator comprises a hydraulic pump with a housing having a main chamber, a secondary chamber, and a wall arranged therebetween. The wall defines at least one opening configured to put the main chamber and the secondary chamber in fluid communication. The hydraulic pump also includes a main cylinder configured to pressurize the fluid in the main chamber when the brake pedal is pressed. The hydraulic pump further comprises a secondary piston and a pressure sensor arranged in fluid communication with the secondary chamber. The pressure sensor is configured to measure the pressure in the secondary chamber and send a signal to a processor indicating the movement of the brake pedal. When the fluid in the main chamber is pressurized, the main piston is configured to guide the fluid from the main chamber to the secondary chamber through the at least one opening to increase the pressure in the secondary chamber.

Document US2021197083 (Logitech Europe) describes a gaming pedal assembly comprising a base and a pedal arm rotatably coupled to the base in a first mounting position which provides a first rotation axis for the pedal arm with respect to the base. The gaming pedal assembly further comprises a piston assembly having a resistance profile, the piston assembly being coupled to the pedal arm in a coupling position which provides a second rotation axis for the piston assembly with respect to the pedal arm. The piston assembly is rotatably coupled to the base at a second mounting position which provides a third rotation axis for the piston assembly with respect to the base. The piston assembly is compressed according to the resistance profile of the piston assembly in response to a user interface region of the pedal arm receiving a pressure force.

However, the prior art documents described involve braking force absorption-damping systems which do not correctly represent the pedal rigidity compared to what actually occurs in the calipers of a vehicle. Moreover, the prior art documents mentioned above do not allow modifying the pedal rigidity in a simple manner. More precisely, the pedal simulators described do not allow adjusting the idle stroke nor do they allow simply adjusting the pedal ratio (defined as the tilt at rest of the hydraulic pump with respect to the base) during the setting and customization steps according to the user's needs. Specifically, the user using the system described in document US2022333618 (Asetek Danmark) necessarily needs an external tool for adjusting the pedal ratio, thus making the process not very user-friendly.

Moreover, traditional brake pedal simulators with hydraulic systems do not implement a true brake caliper in the system as a necessary element to transfer the response in terms of rigidity, which contributes to generating a more realistic driving experience for the user.

Again, commercially available brake pedal simulators measure the force on the pedal but such a measurement of force on the pedal is not a sufficiently representative parameter of the actual braking force measured by true braking systems. Indeed, in true braking systems, the braking force is measured in the caliper, thus downstream of the entire braking system, i.e., considering all the in-line elements contributing to creating the overall rigidity of the system.

The current brake pedal simulators for gaming have several technical problems to be solved, mainly related to the possibility of making the gaming experience as comfortable and authentic as possible for the user, as well as ensuring the possibility for the users themselves to adjust the pedal setting during the setup in a simple manner. Specifically, the technical problems mainly found from the analysis of the closest prior art documents are the difficulty of simulating the real braking feeling when the user operates the brake pedal simulator and the difficulty of easily adjusting the setting of the brake simulation system, specifically when this is a hydraulic-type system, and of customizing it to the user's specific needs. Finally, a difficulty in faithfully representing the braking force applied to the pedal was found.

Patent document US2022/333618 describes a braking simulation system, which uses a complex hydraulic pump, with a master piston and a slave piston, as well as a damping device inside the hydraulic pump itself. The production of such a device is complicated and expensive, and the feedback given to the user is not sufficiently realistic for these specific design features.

In light of the above, there are margins for improvement, which can make the user experience more enjoyable, both when setting and when using a braking system simulator.

### Purpose and object of the invention

It is the object of the present invention to provide a simulation system for simulating a braking system, in particular but not exclusively for gaming applications, and a related gaming system, which solve the problems and overcome the drawbacks of the prior art.

The present invention relates to a simulation system for simulating a braking system, in particular but not exclusively for gaming applications, and a related gaming system, according to the appended claims.

### Detailed description of preferred embodiments of the invention

### List of figures

The invention will now be described by way of nonlimiting example, with particular reference to the figures of the accompanying drawings, in which:
- figure 1 shows a diagram of an embodiment of the system according to the present invention;
- figure 2 shows a detailed diagram of a detail of Fig. 1 (hydraulic pump-caliper connection);
- figure 3 shows a different embodiment of the system according to the present invention;
- figure 4 shows a detail of Fig. 3 with the load cell interposed between brake disc and pads;
- figure 5 diagrammatically shows an electronic gaming system, which uses the simulation system for simulating a braking system according to the present invention.

It is hereby specified that elements of different embodiments can be combined together to provide further embodiments without restrictions by respecting the technical concept of the invention, as those skilled in the art will effortlessly understand from the description.

The present description also makes reference to the prior art for its implementation, as for the detail features not described, such as elements of minor importance usually used in the prior art in solutions of the same type, for example.

When an element is introduced, it is always understood that there may be "at least one" or "one or more".

When a list of elements or features is given in this description, it is understood that the finding according to the invention "comprises" or alternatively "consists of" such elements.

When listing features within the same sentence or bulleted list, one or more of the individual features can be included in the invention without connection with the other features in the list.

Two or more of the parts (elements, devices, systems) described above can be freely associated and considered as a part kit according to the invention.

### Embodiments

The invention provides a brake pedal simulation or "simulator" system, which can be particularly but not exclusively used in gaming, and which can overcome the limitations of customization and user feeling highlighted above in the discussion of the prior art.

With reference to the figures, the brake pedal simulator according to the present invention includes a mechanical lever 110 operatable by the user and connected to a hydraulic pump 120 (in which there is a piston 121 which compresses a hydraulic fluid) by means of a first mechanical connection 111,112 of predefined length and rigid, such as a bar or tube, for example made of metal or plastic.

The mechanical connection thus preferably comprises a rigid bar (mechanical connection) 111 connected to a thrust element 113 configured to receive the action of a foot. The rigid bar can be mechanically connected to the thrust element in various manners, e.g., with an end 112 which can slide into a slot 112a so that the bar 111 is always substantially in the same thrust direction of the hydraulic pump 120 (containing a hydraulic fluid). The thrust element 113 is supported through a ground connection (or on a fixed reference or surface 180) by means of a rotatable connection 115, e.g., a pin, which rests on a support element 116 with respect to a base surface 180. The distance between the ground (or fixed reference or base surface 180) and the end 112 of the bar 111 is referred to as *h*_{VAR} and is variable beforehand (i.e., with the system at rest, not yet operated by the user) by virtue of the adjustment system 160 (see below) . Starting from the adjustment position at rest, the end 112 will be capable of varying in height during the pedal operation.

The hydraulic pump 120 is, in turn, connected to a brake caliper 130 (mechanism for dampening the braking force to be applied by the user), which acts on at least one brake disc portion (not shown, see the next embodiment) . The hydraulic pump 120 and the brake caliper 130 are connected in fluid communication by means of hydraulic pipes 170 so that the pressure generated by the user on the hydraulic pump by means of the mechanical lever 110 is transmitted to the brake caliper 130. The connected assembly of the hydraulic hydraulic pump 120 and brake caliper 130 is a braking force absorption-dampening system, which simulates the braking feeling experienced when driving a true vehicle as much as possible. A load cell 135 is provided in the brake caliper to actually detect and measure the braking force in the caliper due to the force applied by the user to the mechanical lever 110 connected to the hydraulic pump.

The hydraulic pump 120 is also connected, at the opposite end thereof with respect to the mechanical lever 110, to the ground or a fixed reference (such as a base 180) through a rotatable connection 145 and by means of a mechanical connection 140 on the rotatable connection. The connection 140 can optionally be automated by means of an electromechanical mechanism (not shown in the figures). The mechanical connection 140 is of variable length and is optionally manually adjustable, in particular by means of a recirculating-ball system provided at the back of the hydraulic pump itself and connected by means of a manual adjustment element 150, e.g., a mechanical ring nut. Such a mechanism, manually operatable without using external tools by the user when setting the brake pedal simulator, allows for a simple and quick adjustment of the idle stroke of the pedal simulator according to the user's specific needs.

Finally, as mentioned above, the brake pedal simulator according to the invention comprises a mechanism 160 for adjusting the height *h*_{VAR} (at rest) of the mechanical lever operatable by the user beforehand. Such a mechanism allows the user to adjust and customize the tilt (at rest) of the hydraulic pump with respect to a horizontal plane parallel to the aforementioned hypothetical base 180, i.e., an adjustment of the pedal ratio. In particular, the mechanism for adjusting the height of the mechanical lever 110 can consist, for example, of a screw mechanism with gear directly connected to the aforesaid rigid mechanical connection 111. Optionally, such a mechanism 160 can be automated by means of an electromechanical mechanism (not shown in the figures).In order to simulate the true braking experience correctly, the suggested device comprises elements, which are individually present in real braking systems but are arranged here in a new and more effective configuration, in particular for gaming environments, which comprises the following elements:
- mechanical lever ("pedal");
- hydraulic pump ("master cylinder");
- brake caliper with a load cell for force measurement;
- idle stroke adjustment mechanism, e.g., a recirculating-ball screw mechanism; and
- gear-screw mechanism for adjusting the pedal lever ratio.

The co-presence and arrangement of such elements in the various configurations described above allows generating a system which provides a true braking feeling to the user with the possibility of product adaptation and adjustment.

The described assembly works as follows:
- The pedal is connected to the hydraulic pump by means of a fixed mechanical connection;
- The brake hydraulic pump is then fixed to the ground (base) by means of a mechanical connection of adjustable length, e.g., by means of a recirculating-ball screw system placed behind the brake hydraulic pump, which adjusts the dead zone (idle stroke) of the hydraulic pump;
- the hydraulic pump is connected to the caliper by means of hydraulic pipes (e.g., in the shape of a braid) which allow the fluid pressure generated by the hydraulic pump to be brought into the caliper; and
- the fluid pressure received by the caliper is then detected and measured by the load cell positioned on the caliper to measure the braking force in the caliper effectively.

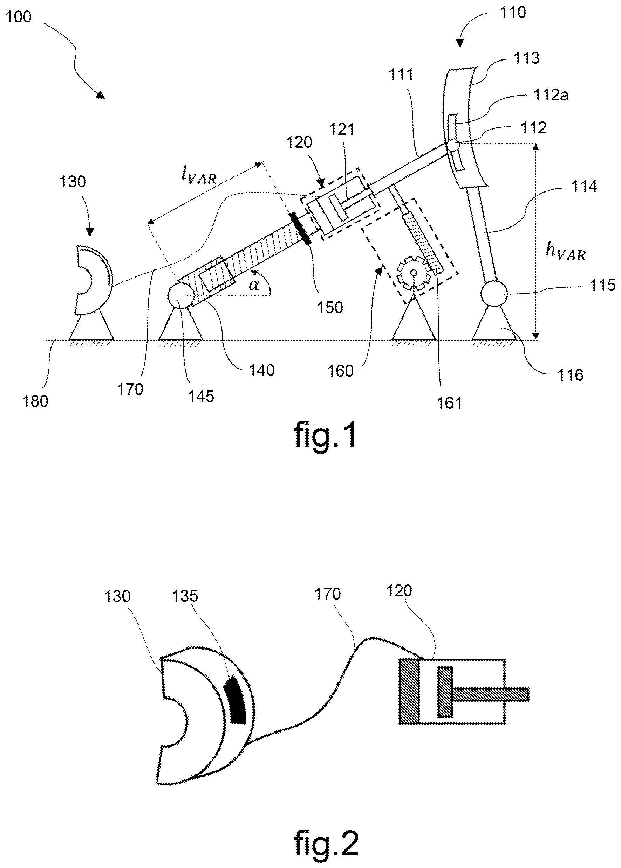

Along with these mechanisms, the system has a further positioning adjustment 160 by modulating the height of the pedal to allow adjusting the tilt (α in Fig. 1) of the hydraulic pump causing an adjustment of the pedal thrust ratio. This adjustment can be achieved by means of a manual screw and gear mechanism or by means of an electromechanical mechanism (not shown). In an aspect according to the invention, also applicable to the next embodiment, the screw mechanism with gear is directly connected to the aforesaid rigid mechanical connection 111 through a threaded rigid bar 161.

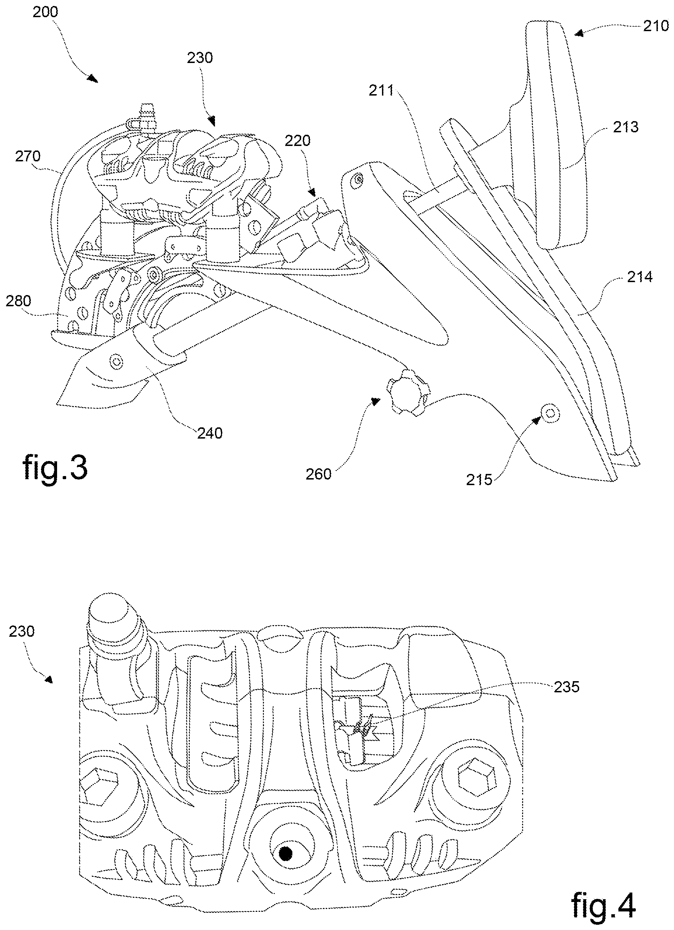

Referring now to the embodiment 200 in Figs. 3 and 4, the mechanical lever 210 is connected to the hydraulic pump 220 like in the previous embodiment (thus containing hydraulic fluid configured to be pressurized by a piston, not shown). Similarly, there is an adjustment system 260 for adjusting the pedal tilt positioning. Moreover, the hydraulic pump 220 and the brake caliper 230 are connected in fluid communication by means of hydraulic pipes 270 as above.

The thrust element 213 is supported through a ground connection (or on a fixed reference or surface) by means of a rotatable connection 215, e.g., a pin, which rests on a support element with respect to a base surface (not shown but similar to those of the previous embodiment). A rigid bar (mechanical connection) 211 is connected to the thrust element 213 configured to receive the action of a foot.

Again, the hydraulic pump 220 is connected, at the opposite end thereof with respect to the mechanical lever 210, to the ground or to a fixed reference (not shown) through a rotatable connection (not shown) and by means of a mechanical connection 240 on the rotatable connection. The mechanical connection 240 can optionally be automated by means of an electromechanical mechanism (not shown in the figures). The mechanical connection 240 is of variable length and is optionally manually adjustable, in particular by means of a recirculating-ball system provided behind the hydraulic pump itself and connected by means of a manual adjustment element (not shown), e.g., a mechanical ring nut.

However, see Fig. 3, a portion of a brake disc 280 on which the brake caliper 230 acts upon the operation of the pedal 210 can be used in the system of the invention. The caliper can generally act on any useful element, as implied by its operation, the brake disc being only a preferred embodiment.

In the brake caliper, in the detail of Fig. 4, there is seen the load cell 235 interposed between brake disc 280 and pads 290.

Optionally, the brake disc 280 is mounted between the mechanical connection 240 and a housing of the adjustment system 260. The braking simulation system 200 is thus compact, easy to produce, and provides realistic feedback to the user because it operates a real brake caliper, in particular by acting on a real brake disc.

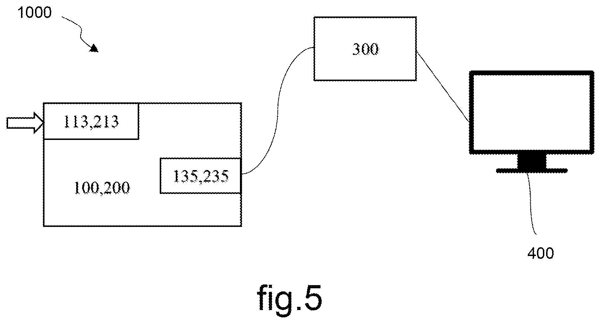

The simulation system described above in the various embodiments can be used in an electronic simulation system 1000, diagrammatically shown in Fig. 5.

The device 100,200 is operated by the user (not shown) by pressing on the pedal 113,213, and is connected to an electronic processing unit (computer or console or other peripheral device) 300 which receives as input the measurement of the load cell 135,235 and processes the simulated braking by displaying it on a screen 400 connected to the electronic processing unit.

The measurement of braking force by the load cell, i.e., in the caliper instead of on the pedal, is more representative of the actual braking force than the force measurement performed on the pedal as in the prior art set out above.

Moreover, a pressure sensor can optionally be provided as a back-up system in case of malfunction of the load cell. Such a pressure sensor can serve the function of measuring the pressure of the hydraulic pump (possibly upstream or downstream of the hydraulic pump itself according to the configuration).

Preferred embodiments have been described above and some variations of the present invention have been suggested, but it is understood that those skilled in the art may make modifications and changes without departing from the related scope of protection, as defined by the appended claims.

## Claims

1. A simulation system (100,200) for simulating a braking system, in particular for gaming applications, comprising a mechanical lever (110,210) rotatably connected (115,215) to a base surface (180) and operatable by a user to apply a braking force, a hydraulic pump (120,220) containing a hydraulic fluid configured to be pressurized by a piston (121) mechanically connected to said mechanical lever (110,210) by means of a rigid mechanical connection (111,211), said hydraulic pump (120,220) being connected to the ground, on the side opposite to said mechanical lever (110,210), by means of a rotatable ground connection (145);
said simulation system (100,200) for simulating a braking system comprising:
- a first mechanism (140,150,240) for adjusting the idle stroke of said hydraulic pump (120,220), said first mechanism (140,150,240) being arranged between said hydraulic pump (120,220) and said rotatable ground connection (145) and being **characterised by**:
- a second mechanism (160,260) for adjusting the lever ratio of said mechanical lever (110,210), said second mechanism (160,260) being connected between said base surface (180) and said rigid mechanical connection (111,211) and being configured to adjust a height at rest (*h*_{VAR}) of the mechanical lever (110,210); and
- a brake caliper (130,230):
- external to said hydraulic pump (120,220) and hydraulically connected (170,270) to said hydraulic pump (120,220);
- comprising or connected to a load cell (135,235) configured to detect and measure said braking force.

2. A system (100,200) according to claim 1, wherein the first mechanism (140,150,240) for adjusting the idle stroke comprises a recirculating-ball system.

3. A system (100,200) according to claim 2, wherein the first mechanism (140,150,240) is provided behind the hydraulic pump (120,220) and is connected thereto by means of a manual adjustment element (150).

4. A system (100,200) according to claim 2, wherein the first mechanism (140,150,240) for adjusting the idle stroke of said hydraulic pump (120,220) is an electromechanical mechanism.

5. A system (100,200) according to one of claims 1 to 4, wherein the second mechanism (160,260) for adjusting the lever ratio comprises a screw mechanism with gear directly connected to the aforesaid rigid mechanical connection (111,211), the screw mechanism being manually operatable.

6. A system (100,200) according to one of claims 1 to 4, wherein the second mechanism (160,260) for adjusting the lever ratio comprises a screw mechanism with gear directly connected to the aforesaid rigid mechanical connection (111,211), the screw mechanism being an electromechanical mechanism.

7. A system (100,200) according to claim 6, wherein the screw mechanism with gear is directly connected to the aforesaid rigid mechanical connection (111,211) through a threaded rigid bar.

8. A system (100) according to one of claims 1 to 7, wherein a pressure sensor is included, being applied and configured to measure, in case of a malfunction of the load cell (135,235), the braking force by measuring the pressure of the hydraulic pump.

9. A system (100,200) according to one of claims 1 to 8, wherein the hydraulic pump (120,220) contains only one piston.

10. A system (100,200) according to one of claims 1 to 9, wherein said brake caliper (130,230) is configured to act on a brake disc portion (280).

11. A system (100,200) according to claim 10, wherein the load cell (235) is inserted between the brake disc (280) and brake pads.

12. A gaming system, comprising a simulation system (100,200) for simulating a braking system, an electronic processing unit (300) connected to a gaming screen (400), **characterized in that** the simulation system (100,200) is according to any one of claims 1 to 11, and wherein said electronic processing unit (300) receives said braking force as input from said load cell (135,235) or said pressure sensor.

## Patentansprüche

1. Simulationssystem (100,200) zur Simulation eines Bremssystems, insbesondere für Spielanwendungen, umfassend einen mechanischen Hebel (110,210), der drehbar (115,215) mit einer Grundfläche (180) verbunden und durch einen Benutzer betätigbar ist, um eine Bremskraft aufzubringen, eine Hydraulikpumpe (120,220), die ein Hydraulikfluid enthält, das dazu konfiguriert ist, durch einen Kolben (121) unter Druck gesetzt zu werden, der mittels einer starren mechanischen Verbindung (111,211) mechanisch mit dem genannten mechanischen Hebel (110,210) verbunden ist, wobei die genannte Hydraulikpumpe (120,220) auf der dem genannten mechanischen Hebel (110,210) gegenüberliegenden Seite mittels einer drehbaren Bodenverbindung (145) mit dem Boden verbunden ist;
wobei das genannte Simulationssystem (100,200) zur Simulation eines Bremssystems Folgendes umfasst:
- einen ersten Mechanismus (140,150,240) zum Einstellen des Leerhubs der genannten Hydraulikpumpe (120,220), wobei der genannte erste Mechanismus (140,150,240) zwischen der genannten Hydraulikpumpe (120,220) und der genannten drehbaren Bodenverbindung (145) angeordnet ist, und **gekennzeichnet durch**:
- einen zweiten Mechanismus (160,260) zum Einstellen der Hebelübersetzung des genannten mechanischen Hebels (110,210), wobei der genannte zweite Mechanismus (160,260) zwischen der genannten Grundfläche (180) und der genannten starren mechanischen Verbindung (111,211) angeschlossen und dazu konfiguriert ist, eine Ruhehöhe (*h*_{VAR}) des mechanischen Hebels (110,210) einzustellen; und
- einen Bremssattel (130,230):
- der außerhalb der genannten Hydraulikpumpe (120,220) angeordnet und hydraulisch (170,270) mit der genannten Hydraulikpumpe (120,220) verbunden ist;
- der eine Kraftmesszelle (135,235), die dazu konfiguriert ist, die genannte Bremskraft zu erfassen und zu messen, umfasst oder mit einer solchen verbunden ist.

2. System (100,200) nach Anspruch 1, wobei der erste Mechanismus (140,150,240) zum Einstellen des Leerhubs ein Kugelumlaufsystem umfasst.

3. System (100,200) nach Anspruch 2, wobei der erste Mechanismus (140,150,240) hinter der Hydraulikpumpe (120,220) vorgesehen und mittels eines manuellen Einstellelements (150) mit dieser verbunden ist.

4. System (100,200) nach Anspruch 2, wobei der erste Mechanismus (140,150,240) zum Einstellen des Leerhubs der genannten Hydraulikpumpe (120,220) ein elektromechanischer Mechanismus ist.

5. System (100,200) nach einem der Ansprüche 1 bis 4, wobei der zweite Mechanismus (160,260) zum Einstellen der Hebelübersetzung einen Schraubenmechanismus mit Zahnrad umfasst, der direkt mit der vorgenannten starren mechanischen Verbindung (111,211) verbunden ist, wobei der Schraubenmechanismus manuell betätigbar ist.

6. System (100,200) nach einem der Ansprüche 1 bis 4, wobei der zweite Mechanismus (160,260) zum Einstellen der Hebelübersetzung einen Schraubenmechanismus mit Zahnrad umfasst, der direkt mit der vorgenannten starren mechanischen Verbindung (111,211) verbunden ist, wobei der Schraubenmechanismus ein elektromechanischer Mechanismus ist.

7. System (100,200) nach Anspruch 6, wobei der Schraubenmechanismus mit Zahnrad über eine starre Gewindestange direkt mit der vorgenannten starren mechanischen Verbindung (111,211) verbunden ist.

8. System (100) nach einem der Ansprüche 1 bis 7, wobei ein Drucksensor enthalten ist, der angebracht und dazu konfiguriert ist, im Falle einer Fehlfunktion der Kraftmesszelle (135,235) die Bremskraft durch Messen des Drucks der Hydraulikpumpe zu messen.

9. System (100,200) nach einem der Ansprüche 1 bis 8, wobei die Hydraulikpumpe (120,220) nur einen Kolben enthält.

10. System (100,200) nach einem der Ansprüche 1 bis 9, wobei der genannte Bremssattel (130,230) dazu konfiguriert ist, auf einen Bremsscheibenabschnitt (280) einzuwirken.

11. System (100,200) nach Anspruch 10, wobei die Kraftmesszelle (235) zwischen der Bremsscheibe (280) und Bremsbelägen eingesetzt ist.

12. Spielsystem, umfassend ein Simulationssystem (100,200) zur Simulation eines Bremssystems, eine elektronische Verarbeitungseinheit (300), die mit einem Spielbildschirm (400) verbunden ist, **dadurch gekennzeichnet, dass** das Simulationssystem (100,200) nach einem der Ansprüche 1 bis 11 ausgebildet ist und dass die genannte elektronische Verarbeitungseinheit (300) die genannte Bremskraft als Eingangsgröße von der genannten Kraftmesszelle (135,235) oder dem genannten Drucksensor empfängt.

## Revendications

1. Un système de simulation (100,200) destiné à simuler un système de freinage, en particulier pour des applications de jeu, comprenant un levier mécanique (110,210) relié de manière rotative (115,215) à une surface de base (180) et actionnable par un utilisateur pour appliquer une force de freinage, une pompe hydraulique (120,220) contenant un fluide hydraulique configuré pour être mis sous pression par un piston (121) relié mécaniquement audit levier mécanique (110,210) au moyen d'une liaison mécanique rigide (111,211), ladite pompe hydraulique (120,220) étant reliée à la masse, du côté opposé audit levier mécanique (110,210), au moyen d'une liaison à la masse rotative(145) ;
ledit système de simulation (100,200) destiné à simuler un système de freinage comprenant :
- un premier mécanisme (140,150,240) destiné à régler la course à vide de ladite pompe hydraulique (120,220), ledit premier mécanisme (140,150,240) étant agencé entre ladite pompe hydraulique (120,220) et ladite liaison à la masse rotative (145) et étant **caractérisé par** :
- un second mécanisme (160,260) destiné à régler le rapport de levier dudit levier mécanique (110,210), ledit second mécanisme (160,260) étant relié entre ladite surface de base (180) et ladite liaison mécanique rigide (111,211) et étant configuré pour régler une hauteur au repos (h_{VAR}) du levier mécanique (110,210) ; et
- un étrier de frein (130,230) :
- externe à ladite pompe hydraulique (120,220) et relié hydrauliquement (170,270) à ladite pompe hydraulique (120,220) ;
- comprenant ou relié à une cellule de charge (135,235) configurée pour détecter et mesurer ladite force de freinage.

2. Un système (100,200) selon la revendication 1, dans lequel le premier mécanisme (140,150,240) destiné à régler la course à vide comprend un système à recirculation de billes.

3. Un système (100,200) selon la revendication 2, dans lequel le premier mécanisme (140,150,240) est prévu derrière la pompe hydraulique (120,220) et est relié à celle-ci au moyen d'un élément de réglage manuel (150).

4. Un système (100,200) selon la revendication 2, dans lequel le premier mécanisme (140,150,240) destiné à régler la course à vide de ladite pompe hydraulique (120,220) est un mécanisme électromécanique.

5. Un système (100,200) selon l'une des revendications 1 à 4, dans lequel le second mécanisme (160,260) destiné à régler le rapport de levier comprend un mécanisme à vis avec engrenage directement relié à ladite liaison mécanique rigide (111,211), le mécanisme à vis étant actionnable manuellement.

6. Un système (100,200) selon l'une des revendications 1 à 4, dans lequel le second mécanisme (160,260) destiné à régler le rapport de levier comprend un mécanisme à vis avec engrenage directement relié à ladite liaison mécanique rigide (111,211), le mécanisme à vis étant un mécanisme électromécanique.

7. Un système (100,200) selon la revendication 6, dans lequel le mécanisme à vis avec engrenage est directement relié à ladite liaison mécanique rigide (111,211) par l'intermédiaire d'une barre rigide filetée.

8. Un système (100) selon l'une des revendications 1 à 7, dans lequel un capteur de pression est inclus, étant appliqué et configuré pour mesurer, en cas de dysfonctionnement de la cellule de charge (135,235), la force de freinage en mesurant la pression de la pompe hydraulique.

9. Un système (100,200) selon l'une des revendications 1 à 8, dans lequel la pompe hydraulique (120,220) ne contient qu'un seul piston.

10. Un système (100,200) selon l'une des revendications 1 à 9, dans lequel ledit étrier de frein (130,230) est configuré pour agir sur une partie de disque de frein (280).

11. Un système (100,200) selon la revendication 10, dans lequel la cellule de charge (235) est insérée entre le disque de frein (280) et des plaquettes de frein.

12. Un système de jeu, comprenant un système de simulation (100,200) destiné à simuler un système de freinage, une unité de traitement électronique (300) reliée à un écran de jeu (400), **caractérisé en ce que** le système de simulation (100,200) est selon l'une quelconque des revendications 1 à 11, et dans lequel ladite unité de traitement électronique (300) reçoit ladite force de freinage en tant qu'entrée provenant de ladite cellule de charge (135,235) ou dudit capteur de pression.
